# EUROPEAN PATENT SPECIFICATION

(11) **EP 2 077 742 B1**
(45) Date of publication and mention of the grant of the patent: **23.06.2010**
(21) Application number: 07821921.9
(22) Date of filing: 26.10.2007
(51) Int. Cl.: A47J 31/18, A47J 31/46, A47J 36/14, A47G 19/14, B05B 1/22, A47J 27/56, A47J 27/58

(54) **A COFFEE MACHINE**
KAFFEEMASCHINE
CAFETIÈRE

(30) Priority: 30.10.2006 TR 200606012
(43) Date of publication of application: 15.07.2009
(73) Proprietor: Arçelik A.S., 34950 Istanbul (TR)
(72) Inventor: HASANREISOGLU, Levent, 34950 Istanbul (TR)
(86) International application number: PCT/EP2007/061561
(87) International publication number: WO 2008/052946

(56) References cited:
- WO-A-2005/122687
- WO-A-2006/000962

## Description

The present invention relates to a coffee machine comprising cooking pots used in preparing Turkish coffee.

In the coffee machines, particularly Turkish coffee machines, the pot wherein the mixture is prepared, is placed in a cooking chamber, and the spout at the upper side of the pot is made to contact the ceiling of the cooking chamber. A good leak-proofing has to be provided between the upper spout of the pot and the ceiling of the cooking chamber in order to prevent overflowing. The spout arranged at the upper portion of the pot makes leak-proofing difficult, liquids such as Turkish coffee that swell while boiling may overflow from the pouring spout upon rising to the upper side of the cooking chamber.

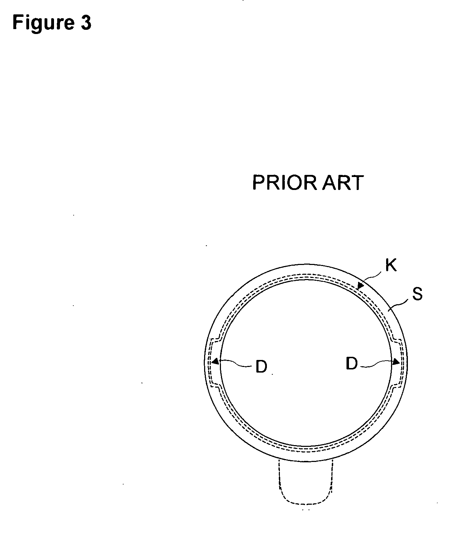

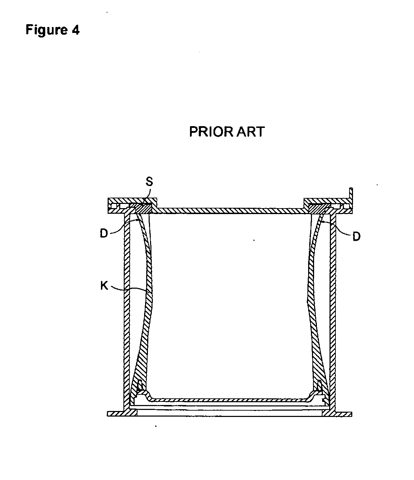

In state of the art patent application no. WO2006/000962, in a coffee machine, the upper edge of the cooking pot (K) and the pouring spouts (D) press on a sealing gasket (S) situated at the ceiling of the cooking room (Figures 3, 4). In order to provide leak-proofing, the cooking pot (K) orifice together with the pouring spouts (D) should retain within the area encircled peripherally by the gasket (S) (Figure 3). Since the pouring spouts (D) are quite near to the side of the gasket (S), when pressure is applied, the sharp edges of the pouring spouts (D) damage by cutting into the gasket (S) and leak-proofing is impaired. When the pouring spouts (D) have to be shaped by extending out from the cooking pot (K), the pouring spouts (D) go out of the gasket (S) area and contact the ceiling of the cooking room instead of the gasket (S) whereby leak-proofing is impaired. When pouring process from the cooking pot (K) is completed, the cooking pot (K) is brought to the vertical position and the liquid drops left at the tip of the pouring spout (D) run along the side of the pouring spout (D) and may reach the body of the cooking pot (K). The liquid drops reaching the body of the cooking pot (K) trickle along the lateral surface of the body and reach the table or countertop whereon the cooking pot (K) is placed.

The aim of the present invention is the realization of a coffee machine comprising a cooking pot whereby the overflowing of liquids from the pouring spout during the cooking process is prevented.

The coffee machine realized in order to attain the aim of the present invention is explicated in the claims.

In the coffee machine of the present invention, the cooking pot is placed in a cooking chamber and the pouring spout at the upper edge of the pot contacts a gasket at the ceiling of the cooking chamber during cooking. At the pouring spout an arc shaped surface is incorporated that extends out from the inner surface of the pot and a chamfer is formed at the continuation of the arc shaped surface that projects out from the area occupied by the gasket.

During cooking, when the cooking pot is lifted, the joint of the arc shaped surface and the chamfer arranged at the pouring spout is embedded into the gasket and since this joint does not form a sharp edge, the gasket is not cut. Consequently, a good leak-proofing is provided without damaging the gasket. By means of the downward sloping chamfer formed at the continuation of the arc shaped surface, when the pot is lifted up, the pouring spout does not collide with the ceiling of the cooking chamber and damaging thereof is prevented.

In an embodiment of the present invention, a groove is formed at the lower portion of the chamfer situated at the end of the pouring spout for the drops to retain suspended after the pouring process with the effect of surface tension, preventing running down.

In another embodiment of the present invention, channels are formed on the periphery of the pot at the vicinity of the base, encircling the outer surface for catching the downwards dripping drops, enabling the drops to cling with the effect of surface tension.

The coffee machine realized in order to attain the aim of the present invention is illustrated in the attached figures, where:

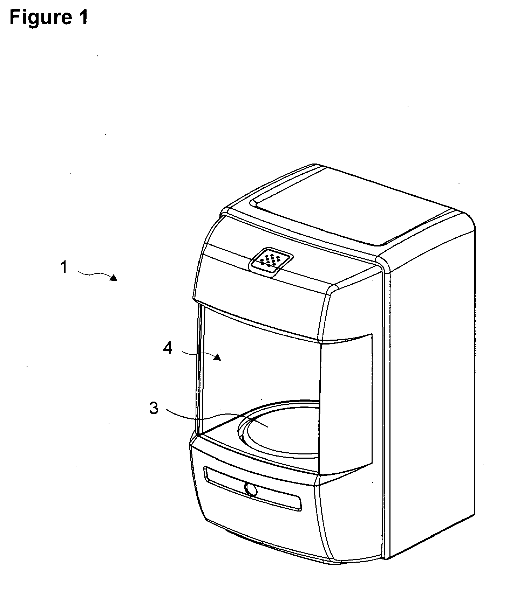

Figure 1 - is the perspective view of a coffee machine.

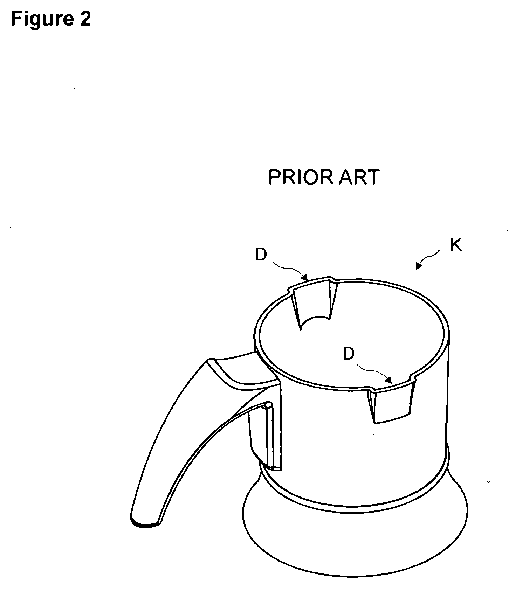

Figure 2 - is the perspective view of a cooking pot in the prior art.

Figure 3 - is the schematic view of the pouring spout of a cooking pot and a sealing gasket in the prior art.

Figure 4 - is the cross sectional view of a cooking pot in the prior art placed in the cooking chamber.

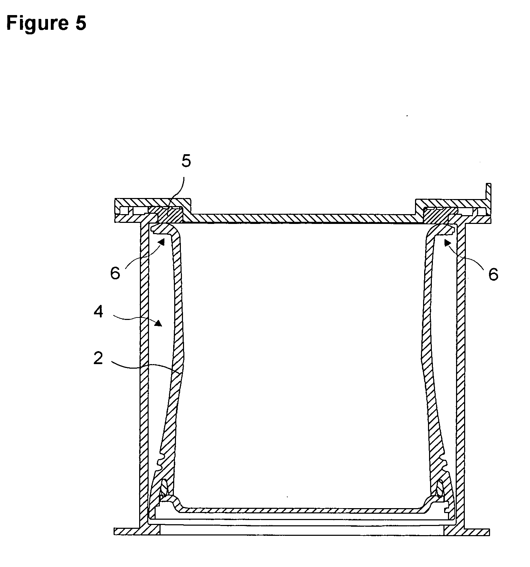

Figure 5 - is the cross sectional view of a cooking pot placed inside the cooking chamber in the embodiment of the present invention.

Figure 6 - is the perspective view of the cooking pot in the embodiment of the present invention.

Figure 7 - is the detailed view of the cooking pot placed in the cooking chamber in the embodiment of the present invention.

The elements illustrated in the figures are numbered as follows:

1. Coffee machine

2. Pot

3. Heater

4. Cooking chamber

5. Gasket

6. Pouring spout

7. Arc shaped surface

8 Chamfer

9. Groove

10. Channel

The coffee machine (1) comprises a pot (2) wherein the cooking process is performed, a heater (3) for heating the pot (2), a cooking chamber (4) wherein the pot (2) is placed and a gasket (5) disposed on the ceiling of the cooking chamber (4), to which the upper edge of the pot (2) contacts during the cooking process, accelerating the cooking process by providing leak-proofing between the ceiling of the cooking chamber (4) and the pot (2) and preventing overflowing.

The heater (3) can move up and down and during the cooking process moves upwards to contact the base of the pot (2) from below for the determined cooking duration, and provides the upper edge of the pot (2) to exert pressure peripherally on the gasket (5) disposed on the cooking chamber (4) ceiling by lifting the pot (2) upwards. The lower surface of the gasket (5) is on the same level as the ceiling of the cooking chamber (4), not forming a protrusion on the ceiling and can be easily cleaned.

In the embodiment of the present invention, the pot (2) comprises one or more pouring spouts (6) that contact the gasket (5) disposed on the ceiling of the cooking chamber (4) without damaging thereof.

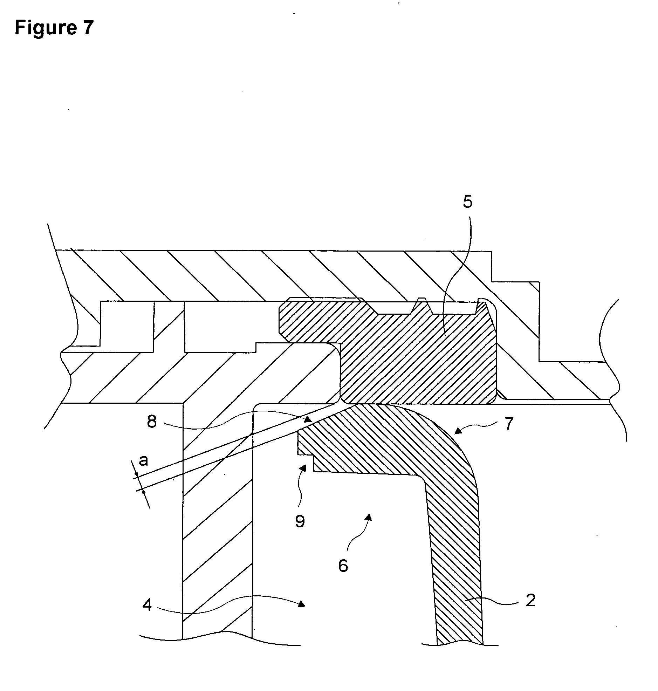

The pouring spout (6) comprises an arc shaped surface (7) that extends from the inner surface of the pot (2) outwards of the pot (2), pressing on the gasket (5) during the cooking process and a downwards sloping chamfer (8) arranged at the continuation of the arc shaped surface (7) that projects out of the area occupied by the gasket (5) during the cooking process, keeping a safety gap (a) between the cooking chamber (4) ceiling and itself during the cooking process (Figure 7).

The joint of the arc shaped surface (7) and the chamfer (8) forms an elevation and this joint is embedded into the gasket (5) when the pot (2) is lifted up, without damaging the gasket (5). Since the joint of the arc shaped surface (7) and the chamfer (8) does not form a sharp corner, the gasket (5) is not cut even though the joint is near the gasket (5), and a good leak-proofing is provided.

When the pot (2) is lifted upwards by the heater (3) during cooking, while the joint of the arc shaped surface (7) and the chamfer (8) is embedded in the gasket (5), since the portion of the chamfer (8) projecting out from the gasket (5) slopes downward, does not contact the ceiling of the cooking chamber (4) by staying away with a safety distance (a). Consequently when the pot (2) is lifted up, the pouring spout (6) projecting out from the gasket (5) region is avoided to collide the ceiling, thus the pot (2) and the cooking chamber (4) ceiling are not damaged.

In an embodiment of the present invention, just after completing the pouring process, when the pot (2) is brought to the vertical position, the last few drops of liquid remaining at the end of the pouring spout (6) are prevented from running down from the lower edge of the pouring spout (6) at the horizontal position and reach the outer surface of the pot (2).

In this embodiment, the pot (2) comprises a groove (9) formed at the lower side of the chanfer (8) providing the drops on the end of the pouring spout (6) to remain suspended with the effect of surface tension, preventing from running down (Figure 7). The groove (9) prevents the drops flowing down from the pouring spout (6) towards the outer surface of the pot (2) and the formed surface tension increases the capacity of the drops to cling without release. The groove (9) has a dimension of approximately between 0, 5 x 0, 5 mm. and 2 x 2 mm.

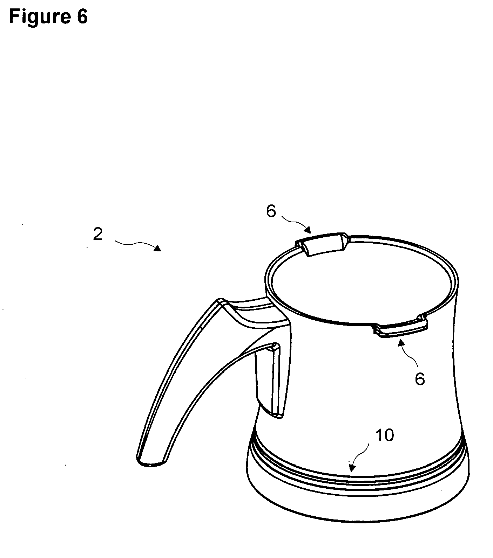

In another embodiment of the present invention, the pot (2) comprises one or more channels (10) arranged on the outer surface and at the vicinity of the base, for catching the downwards flowing drops, providing the drops to cling with the effect of the surface tension (Figure 6). Thus, the drops those pass beyond the groove (9) reaching the outer surface of the pot (2) are prevented from reaching the table or countertop whereon the pot (2) is placed. The channels (10) have a depth and width of approximately 1 - 2 mm.

In the pot (2) of the present invention utilized in coffee machines (1) suited for particularly preparing Turkish coffee, a good leak-proofing is provided between the upper surface of the pot (2) and the ceiling of the cooking chamber (4) with the appropriate design of the pouring spout (6). When the pot (2) is lifted up by the heater (3) during the cooking process, the arc shaped surface (7) of the pouring spout (6) presses on the gasket (5) without damaging, preventing the gasket (5) from being cut by sharp edges. By increasing the quality of pouring, the drops are prevented from running down from the lower portion of the pouring spout (6) to the outer surface of the pot (2) and reaching the table or countertop whereon the pot (2) is placed even if the drops reach the outer surface of the pot (2).

## Claims

1. A coffee machine (1) comprising a pot (2) wherein the cooking process is performed, a heater (3) for heating the pot (2), a cooking chamber (4) wherein the pot (2) is placed and a gasket (5) disposed on the ceiling of the cooking chamber (4), to which the upper edge of the pot (2) contacts during the cooking process, and **characterized by** a pot (2), comprising a pouring spout (6) with an arc shaped surface (7) that extends outwards from the inner surface of the pot (2), pressing on the gasket (5) during the cooking process, and a downwards sloping chamfer (8) arranged at the continuation of the arc shaped surface (7), projecting out of the area occupied by the gasket (5) during the cooking process, keeping a safety gap (a) between the cooking chamber (4) ceiling and itself.

2. A coffee machine (1) as in Claim 1, **characterized by** the pot (2) comprising the pouring spout (6) comprising a groove (9) formed at the lower side of the chamfer (8) providing the drops on the end of the pouring spout (6) to remain suspended with the effect of surface tension and preventing from running down.

3. A coffee machine (1) as in Claim 1 or 2, **characterized by** the pot (2) comprising one or more channels (10) encircling the outer surface thereof, for catching the downwards dripping drops, providing the drops to cling with the effect of the surface tension.

## Patentansprüche

1. Kaffeemaschine (1) mit einem Behälter (2), in dem der Brühvorgang durchgeführt wird, einer Heizeinrichtung (3) zum Erwärmen des Behälters (2), einer Brühkammer (4), in die der Behälter (2) gestellt wird, und einer Dichtung (5), die an der Decke der Brühkammer (4) angeordnet ist, und mit der die untere Kante des Behälters während des Brühvorgangs in Kontakt gelangt,
**dadurch gekennzeichnet, dass** ein Behälter (2)
- eine Ausgusstülle (6) mit einer bogenförmigen Fläche (7) umfasst, die sich von der Innenfläche des Behälters (2) aus erstreckt, und die während des Brühvorgangs auf die Dichtung (5) andrückt, und
- eine nach unten geneigte Verjüngung (8) umfasst, die an der Fortsetzung der bogenförmigen Fläche (7) angeordnet ist, und die während des Brühvorgangs aus dem Bereich herausragt, der von der Dichtung (5) eingenommen wird, und einen Sicherheitsabstand (a) zwischen der Decke der Brühkammer (4) und sich selbst aufrechterhält.

2. Kaffeemaschine (1) nach Anspruch 1, **dadurch gekennzeichnet, dass** die Ausgusstülle (6) des Behälters (2) eine Nut (9) umfasst, die an der unteren Seite der Verjüngung (8) vorgesehen ist, und die es ermöglicht, dass die Tropfen aufgrund der Wirkung der Oberflächenspannung am Ende der Ausgusstülle (6) hängen bleiben und nicht herabfließen.

3. Kaffeemaschine (1) nach Anspruch 1 oder 2, **dadurch gekennzeichnet, dass** der Behälter (2) einen oder mehrere Kanäle (10) umfasst, die seine Außenfläche umlaufen, um die nach unten fallenden Tropfen aufzufangen, und der vorsieht, dass die Tropfen aufgrund der Wirkung der Oberflächenspannung haften bleiben.

## Revendications

1. Une machine à café (1) comprenant un pot (2) où le processus de cuisson est réalisé, un appareil de chauffage (3) pour le chauffage du pot (2), une chambre de cuisson (4) où le pot (2) est placé et un joint (5) disposé sur le plafond de la chambre de cuisson (4), avec lequel le bord supérieur du pot (2) a un contact pendant la cuisson,
et **caractérisé par** un pot (2),
- comportant un bec verseur (6) avec une surface en arc de cercle (7) qui s'étend vers l'extérieur de la surface intérieure du pot (2), en appuyant sur le joint (5) lors de la cuisson,
- et une pente chanfrein (8) disposée à la poursuite de la surface en arc de cercle (7), faisant sailli hors de la zone occupée par le joint (5) lors du processus de cuisson, en conservant une distance de sécurité (a) entre le plafond de la chambre de cuisson (4) et elle-même.

2. Une machine à café (1) selon la Revendication 1, **caractérisé par** le pot (2) comprenant le bec verseur (6) qui a une rainure (9) formée à la face inférieure du chanfrein (8) fournissant les gouttes sur la fin du bec verseur (6) pour rester en suspension avec l'effet de la tension superficielle et empêchant ainsi l'écoulement.

3. Une machine à café (1) selon la revendication 1 ou 2, **caractérisé par** le pot (2) comprenant un ou plusieurs canaux (10) entourant la surface extérieure de celle-ci, pour la capture de gouttes vers le bas, en assurant que les gouttes s'accrochent sous l'effet de la tension de surface.
